# FASCICULE DE BREVET EUROPEEN

(11) **EP 3 629 074 B1**
(45) Date de publication et mention de la délivrance du brevet: **12.06.2024**
(21) Numéro de dépôt: 19199537.2
(22) Date de dépôt: 25.09.2019
(51) Int. Cl.: G02B 27/01, G01C 23/00, G08G 5/00

(54) **SYSTÈME D'AFFICHAGE TÊTE HAUTE, PROCÉDÉ D'AFFICHAGE ET PRODUIT PROGRAMME D'ORDINATEUR ASSOCIÉS**
HEAD-UP-ANZEIGESYSTEM, ENTSPRECHENDES ANZEIGEVERFAHREN UND COMPUTERPROGRAMMPRODUKT
HEAD-UP DISPLAY SYSTEM, ASSOCIATED DISPLAY METHOD AND COMPUTER PROGRAM PRODUCT

(30) Priorité: 26.09.2018 FR 1800997
(43) Date de publication de la demande: 01.04.2020
(73) Titulaire: THALES, 92400 Courbevoie (FR)
(72) Inventeur: MENNECHET, Florent, 33700 MERIGNAC (FR); BOTA, Valéry, 33700 MERIGNAC (FR)
(74) Mandataire: Lavoix

(56) Documents cités:
- EP-A1- 2 793 070
- FR-A1- 3 057 685
- IL-A- 252 056
- US-A- 4 028 725
- US-B1- 9 244 280

## Description

La présente invention concerne un système d'affichage tête haute configuré pour être embarqué dans un aéronef pilotable par au moins un pilote.

La présente invention concerne également un procédé d'affichage et un produit programme d'ordinateur associés.

En particulier, la présente invention concerne la visualisation d'éléments extérieurs à l'aéronef tel le trafic aux environs de l'aéronef.

Il existe déjà dans l'état de la technique différents systèmes de visualisation de l'état de trafic aux environs d'un aéronef.

On connait un système d'affichage, dit tête basse, qui permet d'afficher des informations sur un écran disposé dans l'aéronef.

Ainsi, par exemple, le système d'alerte de trafic et d'évitement de collision (TCAS, de l'anglais « Traffic alert and Collision Avoidance System ») propose une représentation graphique bidimensionnelle des aéronefs environnants en fonction de leur distance horizontale jusqu'à l'aéronef donné.

On connait également de EP 2 793 070 un système d'affichage, dit tête haute.

Un tel système d'affichage tête haute permet de projeter la position tridimensionnelle de chaque aéronef sur une surface transparente placée devant le pilote. Chaque aéronef environnant est représenté sur une telle surface sous la forme d'une représentation graphique qui est placée alors sur l'axe de vision du pilote vers cet aéronef environnant.

Ce type d'affichage est connu dans l'état de la technique sous le terme « conforme » car il vient se placer sur la position réelle de l'aéronef et permet ainsi d'afficher l'information du paysage réel. Pour cela, il dépend directement de la position de l'aéronef, de l'attitude de l'aéronef et de l'orientation de l'axe de vision du pilote.

Par opposition au terme « conforme », le type d'affichage du système TCAS mentionné précédemment, est connu dans l'état de la technique sous le terme « non-conforme ». En particulier, ce type d'affichage dépend du vecteur de vitesse de l'aéronef et ne change pas avec les changements de l'attitude de celui-ci.

Il est également connu d'utiliser ces deux systèmes d'affichage en même temps afin d'améliorer la perception par le pilote de l'environnement de l'aéronef.

Toutefois, cette utilisation simultanée des deux systèmes n'est pas suffisamment commode pour le pilote.

En effet, lors de l'utilisation du système d'affichage tête haute, le pilote a le regard focalisé vers l'extérieur. En revanche, lorsque le pilote utilise le système d'affichage tête basse, il doit accommoder sa vision pour lire les informations sur l'écran. Cette transition augmente la fatigue du pilote et lui fait perdre du temps dans des situations critiques.

La présente invention a pour but d'améliorer le système d'affichage tête haute afin de permettre une visualisation de l'environnement de l'aéronef par le pilote plus aisée et moins fatigante.

A cet effet, l'invention a pour objet un système d'affichage tête haute selon la revendication 1.

Suivant d'autres aspects avantageux de l'invention, le système d'affichage tête haute comprend une ou plusieurs des caractéristiques des revendications 2 à 5.

L'invention a également pour objet un procédé d'affichage tête haute selon la revendication 6.

Suivant un autre aspect avantageux de l'invention, le procédé d'affichage tête haute est selon la revendication 7.

L'invention a également pour objet un produit programme d'ordinateur selon la revendication 8.

Ces caractéristiques et avantages de l'invention apparaitront à la lecture de la description qui va suivre, donnée uniquement à titre d'exemple non limitatif, et faite en référence aux dessins annexés, sur lesquels :
- la figure 1 est une vue schématique d'un système d'affichage tête haute selon l'invention disposé dans un aéronef ;
- la figure 2 est une vue de côté schématique d'un cockpit de l'aéronef de la figure 1 ;
- la figure 3 est une vue schématique de l'intérieur du cockpit de la figure 2 ;
- la figure 4 est un organigramme d'un procédé d'affichage tête haute selon l'invention, le procédé étant mise en oeuvre par le système d'affichage tête haute de la figure 1.

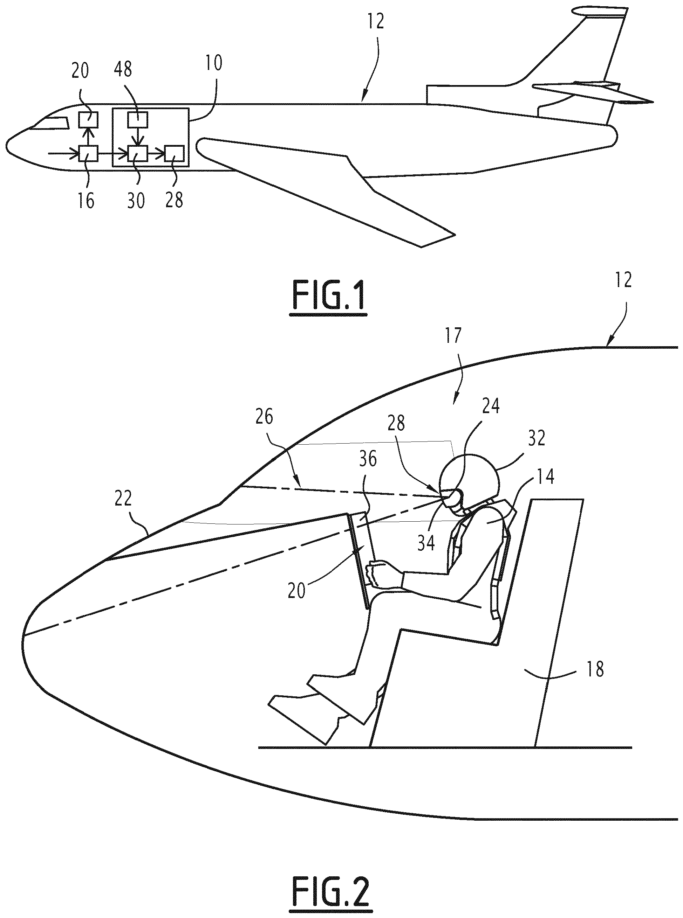

Un système d'affichage 10 est représenté sur la figure 1. Ce système 10 est embarqué dans un aéronef 12.

On comprend ici par aéronef 12, tout avion ou hélicoptère ou tout autre engin volant pilotable par un pilote 14 à partir de cet engin.

Selon un autre exemple de réalisation, l'aéronef 12 est un drone pilotable à distance. Dans ce cas, le système d'affichage 10 est disposé dans un centre de contrôle, par exemple terrestre, à partir duquel le pilotage du drone est effectué.

L'aéronef 12 est entouré d'un environnement extérieur comprenant au moins un élément extérieur 15. L'élément extérieur 15 est par exemple un aéronef environnant, une piste d'atterrissage, un obstacle, un objectif etc.

Outre le système d'affichage 10, l'aéronef 12 comprend un module d'acquisition 16 permettant d'acquérir la position relative ou absolue d'au moins un élément extérieur, tel que l'élément extérieur 15.

En particulier, le module d'acquisition 16 est configuré pour acquérir la position d'au moins un élément extérieur se trouvant à une distance inférieure à une distance maximale prédéterminée de l'aéronef 12 qui est égale par exemple à 20 NM.

Cette position d'un tel élément extérieur est fournie par des systèmes embarqués connus en soi, tels que par exemple le système d'alerte de trafic et d'évitement de collision TCAS, le système de surveillance de type ADS-B (de l'anglais « Automatic Dependant Surveillance-Broadcast) ou encore le radar.

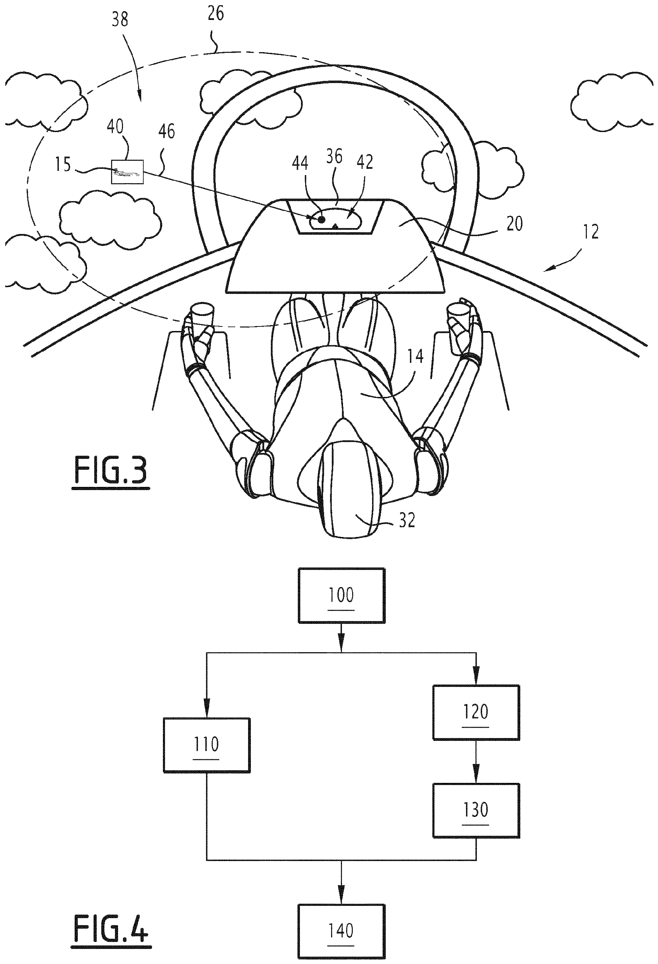

Comme visible sur les figures 2 et 3, l'aéronef 12 comprend un cockpit 17.

Le cockpit 17 comporte au moins un siège 18 du pilote 14, au moins un écran d'affichage tête basse 20 disposé dans le cockpit 17 et un pare-brise 22 au moins partiellement transparent et séparant l'intérieur du cockpit 17 de l'environnement extérieur de l'aéronef 12.

L'écran d'affichage tête basse 20 est une surface configurée pour afficher au moins une image.

Avantageusement, l'écran d'affichage tête basse 20 est configuré pour afficher des informations relatives à l'environnement extérieur de l'aéronef 12 tel le trafic aux environs de l'aéronef 12. Les informations affichées sont alors du type non-conforme.

L'écran d'affichage tête basse 20 est configuré pour être allumé et éteint par le pilote 14.

L'écran d'affichage tête basse 20 est configuré pour être observé par le pilote 14 à partir d'un point d'observation 24 selon un champ visuel 26 du pilote 14, lorsque le pilote 14 est assis sur le siège 18.

Le point d'observation 24 est, en particulier, un des deux yeux du pilote 14.

Le champ visuel 26 du pilote est la portion de l'espace propre à être observée par le pilote 14 à un instant donné. Le champ visuel 26 définit ainsi un cône solide ayant pour sommet le point d'observation 24.

En référence à la figure 1, le système d'affichage 10 comprend un écran d'affichage tête haute 28 et un module de contrôle d'affichage 30 sur l'écran d'affichage tête haute 28.

L'écran d'affichage tête haute 28 est configuré pour être disposé dans le cockpit 17 de l'aéronef 12 selon une pluralité de positions.

L'écran d'affichage tête haute 28 est propre à être observé par le pilote 14 à partir du point d'observation 24 selon le champ visuel 26 du pilote 14.

L'écran d'affichage tête haute 28 est au moins partiellement transparent.

Avantageusement, l'écran d'affichage tête haute 28 est une visière intégrée dans un casque 32 propre à être porté par le pilote 14, comme visible sur la figure 2.

En variante, l'écran d'affichage tête haute 28 est une surface transparente fixée dans le cockpit 17 et placée devant le pilote 14.

Comme visible sur la figure 1, au moins une position, dite position d'interposition, de l'écran d'affichage tête haute 28 dans le cockpit 17 correspond à une position dans laquelle une partie, dite partie interposée 34, est disposée en regard d'au moins une partie de l'écran d'affichage tête basse 20, dite partie d'affichage 36, dans le champ visuel 26 du pilote 14 entre le point d'observation 24 et la partie d'affichage 36.

En pratique, une pluralité de positions d'interposition de l'écran d'affichage tête haute 28 sont possibles dans le cockpit 17.

Le module de contrôle d'affichage 30 est configuré pour afficher une zone d'affichage conforme 38.

Avantageusement, la zone d'affichage conforme 38 est disposée en regard d'au moins une partie du pare-brise 22 de l'aéronef 12, dans le champ visuel 26 du pilote entre le point d'observation 24 et cette partie du pare-brise 22.

De manière connue en soi, la zone d'affichage conforme 38 permet de visualiser la position d'au moins un élément extérieur fournie par le module d'acquisition 16 en projetant cette position sur l'écran d'affichage tête haute 28, en superposition du paysage réel.

Le module de contrôle d'affichage 30 est alors configuré pour associer un premier symbole 40 à chaque élément extérieur à afficher dans la zone d'affichage conforme 38. Le premier symbole 40 présente, par exemple, une figure bidimensionnelle telle qu'un triangle, un carré, un losange, etc. Différentes figures peuvent par exemple être associées à des éléments extérieurs, en fonction par exemple de la nature de ces éléments.

Lorsque l'écran d'affichage tête haute 28 est dans la position d'interposition, le module de contrôle d'affichage 30 est configuré en outre pour afficher une zone d'affichage non-conforme 42 dans la partie interposée 34.

La zone d'affichage non-conforme 42 permet de visualiser la position d'au moins un élément extérieur en fonction notamment de la direction de la composante horizontale du vecteur vitesse de l'aéronef 12. Ce type d'affichage est par exemple indépendant de l'attitude de l'aéronef 12 et notamment, de son orientation en tangage, en roulis et en cap.

En particulier, le module de contrôle d'affichage 30 est configuré pour associer un deuxième symbole 44 à au moins un élément extérieur à afficher dans la zone d'affichage non-conforme 42. Le deuxième symbole 44 présente par exemple une figure bidimensionnelle telle qu'un triangle, un carré, un losange, etc. Différentes figures peuvent par exemple être associées à des différents éléments extérieurs.

En variante, la zone d'affichage non-conforme 42 permet de visualiser la trajectoire planifiée de l'aéronef 12 sur une carte bidimensionnelle, une image de l'extérieur provenant d'une caméra, non représentée, disposée dans l'aéronef 12 ou des informations relatives à au moins un élément extérieur.

La zone non-conforme 42 étant affichée sur la partie interposée 34 en regard de la partie d'affichage 36 de l'écran d'affichage tête basse 20, la zone non-conforme 42 n'encombre pas la vue de l'environnement de l'aéronef 12 à travers le pare-brise 22 pour le pilote 14. Ainsi, le pilote 14 a une meilleure perception de l'environnement de l'aéronef 12.

Avantageusement, comme visible sur la figure 3, la partie d'affichage 36, en regard de la partie interposée 34 est disposée sur le haut de l'écran d'affichage tête basse 20. Le terme « haut » est défini par rapport à l'axe vertical lorsque l'aéronef 12 est posé au sol.

Dans une position différente de la position d'interposition, en particulier lorsque la partie d'affichage 36 se situe hors du champ visuel 26 du pilote 14, le module de contrôle d'affichage 30 est configuré pour afficher la zone d'affichage non-conforme 42 en regard d'au moins une partie du pare-brise 22 de l'aéronef 12, dans le champ visuel 26 du pilote entre le point d'observation 24 et cette partie du pare-brise 22.

Avantageusement, la zone d'affichage conforme 38 et la zone d'affichage non-conforme 42 sont distinctes et en contact. Ainsi le pilote 14 observe aisément les deux zones 38, 42.

Le module de contrôle d'affichage 30 est configuré en outre pour afficher au moins un lien 46 entre la zone d'affichage conforme 38 et la zone d'affichage non-conforme 42.

En particulier, pour au moins un élément extérieur, le lien 46 relie le premier symbole 40 et le deuxième symbole 44.

Le lien 46 est ainsi associé à une position relative ou absolue d'un tel élément extérieur.

Avantageusement, le module de contrôle d'affichage 30 est, en outre, configuré pour afficher une image collimatée.

L'image collimatée est une image dont les rayons de lumière arrivent au point d'observation 24 du pilote 14 de manière parallèle.

L'image collimatée est alors dite renvoyée à l'infini.

Ainsi, lorsque le pilote 14 a le regard focalisé vers l'extérieur de l'aéronef 12, il peut observer l'image collimatée sans avoir à accommoder sa vision à une distance plus proche de lui. Ainsi, le pilote 14 ne se fatigue pas à accommoder sa vue et gagne du temps sans perdre d'informations sur l'environnement de l'aéronef 12. Le pilote 14 appréhende ainsi plus aisément les situations critiques qu'il rencontre éventuellement.

De plus, l'image collimatée semble être à l'infini pour le pilote 14. Ainsi, lorsque le pilote 14 bouge sa tête et déplace le point d'observation 24, l'image collimatée reste fixe pour le pilote 14.

Avantageusement, le module de contrôle d'affichage 30 est configuré en outre pour éteindre l'écran d'affichage tête basse 20 lorsque le module de contrôle d'affichage 30 affiche une zone d'affichage non-conforme 42 dans la partie interposée 34.

Dans un mode de réalisation avantageux, le système d'affichage 10 comprend en outre un module d'acquisition 48 configuré pour acquérir des informations relatives aux mouvements d'au moins un doigt du pilote 14 en contact avec une interface tactile. Ces informations sont destinées pour commander le module de de contrôle d'affichage 30.

Avantageusement, l'interface tactile est l'écran d'affichage tête basse 20.

L'interface tactile 48 permet, par exemple, de tracer une trajectoire sur une carte affichée sur la zone d'affichage non-conforme 42 ou de manipuler la caméra de l'aéronef 12.

Un procédé d'affichage tête haute selon l'invention va maintenant être décrit en référence à la figure 4 présentant un organigramme de ses étapes.

Les étapes de ce procédé seront expliquées en référence à un unique élément extérieur 15. Ces étapes sont réitérées de manière analogue pour chaque élément extérieur 15 supplémentaire.

Initialement, l'écran d'affichage tête basse 20 est allumé.

L'écran d'affichage tête haute 28 est dans la position d'interposition.

Lors de l'étape initiale 100, le module d'acquisition 16 acquiert la position de l'élément extérieur 15, puis la transmet au module de contrôle d'affichage 30 et à l'écran d'affichage tête basse 20.

Puis, lors de l'étape 110, le module de contrôle d'affichage 30 affiche la zone d'affichage conforme 38, avantageusement de manière collimatée.

En particulier, le module de contrôle d'affichage 30 affiche le premier symbole 40 associé à l'élément extérieur 15 dans la zone d'affichage conforme 38.

En même temps, l'écran d'affichage tête basse 20 affiche au moins une information non-conforme relative à la position de l'élément extérieur 15. Par exemple, la position de l'élément extérieur 15 est représentée sur une carte bidimensionnelle.

Le pilote 14 observe alors séparément la zone d'affichage conforme 38 placée à l'infini en regard du pare-brise 22 et l'écran d'affichage tête basse 20 dont l'image affichée est située dans le cockpit 17. Le pilote 14 est ainsi obligé d'accommoder à chaque fois qu'il observe alternativement la zone d'affichage conforme 38 et l'écran d'affiche tête basse 20.

Puis, lors de l'étape 120, le pilote 14 éteint l'écran d'affichage tête basse 20, notamment lorsqu'une situation critique apparait pour le pilote 14.

En variante, le pilote 14 émet un signal au module de contrôle d'affichage 30 lorsqu'une situation critique apparait pour le pilote 14. Le module de contrôle d'affichage 30 éteint alors l'écran d'affichage tête basse 20.

Lors de l'étape 130, le module de contrôle d'affichage 30 affiche la zone d'affichage non-conforme 42 de manière collimatée sur la partie interposée 34.

En particulier, le module de contrôle d'affichage 30 affiche le deuxième symbole 44 associé à l'élément extérieur 15 dans la zone d'affichage non-conforme 42.

Les deux zones d'affichage 38, 42 étant affichées de manière collimatée, les deux zones d'affichage 38, 42 apparaissent à l'infini pour le pilote 14. Le pilote 14 n'accommode donc pas quand il regarde alternativement l'une des zones d'affichage 38, 42 puis l'autre. Le pilote 14 ne se fatigue alors pas et ne perd pas de temps inutilement lors de l'éventuelle situation critique.

Optionnellement, lors de l'étape 140, ayant lieu après les étapes 110 et 140, le module de contrôle d'affichage 30 affiche au moins un lien 46 entre la zone d'affichage conforme 38 et la zone d'affichage non-conforme 42. En particulier, le lien 46 relie le premier symbole 40 et le deuxième symbole 44.

On conçoit alors que la présente invention présente un certain nombre d'avantages.

Tout d'abord, le système d'affichage tête haute 10 selon l'invention permet l'affichage sur un même écran d'affichage 28 de la zone d'affichage conforme 38 et de la zone d'affichage non-conforme 42.

Ainsi, le système d'affichage tête haute 10 permet un affichage collimatée des deux zones 38, 42 et ainsi permet au pilote 14 d'observer les deux zones d'affichage 38, 42 successivement sans accommoder.

L'invention permet donc de réduire la fatigue du pilote 14 et évite les pertes de temps dues à l'accommodation.

Le pilote 14 a ainsi, grâce à l'invention, une meilleure perception de l'environnement de l'aéronef 12 lui permettant de mieux réagir dans les situations critiques. En particulier, le pilote 14 a une meilleure perception des éléments extérieurs 15, notamment de leur position.

L'affichage des deux zones d'affichage 38, 42 sur le même écran d'affichage 28 permet, en outre, d'afficher l'au moins un lien 46 entre les deux zones 38, 42. Le lien 46 permet alors au pilote 14 d'associer rapidement l'élément extérieur 15 avec le deuxième symbole 44 associé affiché sur la zone non conforme 42.

Ce lien 46 permet alors au pilote 14 de profiter simultanément des avantages des deux zones d'affichage 38, 42 ce qui réduit la charge de travail du pilote 14. Ceci lui permet ainsi d'être plus concentré sur l'environnement de l'aéronef 12 et sur les tâches importantes à effectuer.

On conçoit que l'invention permet de remédier aux inconvénients de l'état de la technique et d'améliorer le système d'affichage tête haute afin de permettre une visualisation de l'environnement de l'aéronef 12 par le pilote 14 plus aisée et moins fatigante.

## Revendications

1. Système d'affichage tête haute (10) configuré pour être embarqué dans un aéronef (12) pilotable par au moins un pilote (14) et comportant un écran d'affichage tête basse (20) propre à afficher des informations du type non-conforme, le système d'affichage (10) comportant :
- un écran d'affichage tête haute (28) au moins partiellement transparent et configuré pour être disposé dans le cockpit (17) de l'aéronef (12) selon une pluralité de positions et être observé par le pilote (14) à partir d'un point d'observation (24) selon un champ visuel (26) du pilote (14) ;
au moins une position, dite position d'interposition, de l'écran d'affichage tête haute (28) dans le cockpit (17) correspondant à une position dans laquelle une partie, dite partie interposée (34), est disposée en regard d'au moins une partie (36) de l'écran d'affichage tête basse (20) dans le champ visuel (26) du pilote (14) entre le point d'observation (24) et cette partie (36) de l'écran d'affichage tête basse (20) ;
- un module de contrôle d'affichage (30) sur l'écran d'affichage tête haute (28) configuré pour afficher une zone d'affichage conforme (38) disposée en regard de l'environnement extérieur de l'aéronef (12) et lorsque l'écran d'affichage tête haute (28) est dans la position d'interposition, une zone d'affichage non-conforme (42) dans la partie interposée (34),
le module de contrôle d'affichage (30) étant configuré pour afficher au moins un lien (46) entre la zone d'affichage conforme (38) et la zone d'affichage non-conforme (42),
le module de contrôle d'affichage (30) étant configuré pour associer un premier symbole (40) et un deuxième symbole (44) à au moins un élément extérieur (15) à l'aéronef (12) et à afficher le premier symbole (40) dans la zone d'affichage conforme (38), le deuxième symbole (44) dans la zone d'affichage non-conforme (42) et le lien (46) reliant le premier symbole (40) et le deuxième symbole (44).

2. Système d'affichage (10) selon la revendication 1, dans lequel le module de contrôle d'affichage (30) est configuré pour afficher une image collimatée.

3. Système d'affichage (10) selon la revendication 1 ou 2, dans lequel l'écran d'affichage tête haute (28) est une visière intégrée dans un casque (32) propre à être porté par le pilote (14).

4. Système d'affichage (10) selon l'une des revendications précédentes, dans lequel la zone d'affichage conforme (38) et la zone d'affichage non-conforme (42) sont distinctes et en contact.

5. Système d'affichage (10) selon l'une des revendications précédentes, comprenant en outre un module d'acquisition (48) configuré pour acquérir des informations relatives aux mouvements d'au moins un doigt du pilote (12) en contact avec une interface tactile, les informations étant destinées pour commander le module de contrôle d'affichage (30).

6. Procédé d'affichage tête haute dans un aéronef (12) pilotable par au moins un pilote (14) et comportant un écran d'affichage tête basse (20) propre à afficher des informations du type non-conforme, le procédé d'affichage comprenant les étapes suivantes :
- observation par le pilote (14) d'un écran d'affichage tête haute (28) au moins partiellement transparent et disposé dans le cockpit (17) de l'aéronef (12) à partir d'un point d'observation (24) selon un champ visuel (26) du pilote (14) ;
- affichage sur l'écran d'affichage tête haute (28) d'une zone d'affichage conforme (38) disposée en regard de l'environnement extérieur de l'aéronef (12) ;
- affichage d'une zone d'affichage non-conforme (42) lorsque l'écran d'affichage tête haute (28) est dans une position, dite position d'interposition, de l'écran d'affichage tête haute (28) dans le cockpit (17) correspondant à une position dans laquelle une partie, dite partie interposée (34), est disposée en regard d'au moins une partie (36) de l'écran d'affichage tête basse (20) dans le champ visuel (26) du pilote (14) entre le point d'observation (24) et cette partie (36) de l'écran d'affichage tête basse (20), la zone d'affichage non-conforme (42) étant affichée dans la partie interposée (34),
au moins un lien (46) étant affiché entre la zone d'affichage conforme (38) et la zone d'affichage non-conforme (42), un premier symbole (40) et un deuxième symbole (44) étant associés à au moins un élément extérieur (15) à l'aéronef (12), le premier symbole (40) étant affiché dans la zone d'affichage conforme (38), le deuxième symbole (44) étant affiché dans la zone d'affichage non-conforme (42), et le lien (46) reliant le premier symbole (40) et le deuxième symbole (44).

7. Procédé d'affichage tête haute selon la revendication 6, comportant les étapes suivantes avant l'étape d'affichage de la zone d'affichage non-conforme (42) :
- affichage d'une information non-conforme sur l'écran d'affichage tête basse (20) ;
- extinction de l'écran d'affichage tête basse (20).

8. Produit programme d'ordinateur comportant des instructions logicielles qui, lorsqu'elles sont mises en oeuvre par un équipement informatique, mettent en oeuvre les étapes postérieures à l'étape d'observation du procédé selon la revendication 6 ou 7.

## Patentansprüche

1. Head-up-Anzeigesystem (10), das so konfiguriert ist, dass es in einem Luftfahrzeug (12) mitgeführt werden kann, das von mindestens einem Piloten (14) gesteuert werden kann, und das einen Head-down-Anzeigebildschirm (20) umfasst, der geeignet ist, Informationen des nicht konformen Typs anzuzeigen, wobei das Anzeigesystem (10) umfasst:
- einen Head-up-Anzeigebildschirm (28), der zumindest teilweise transparent und so konfiguriert ist, dass er im Cockpit (17) des Luftfahrzeugs (12) an mehreren Positionen angeordnet und vom Piloten (14) von einem Beobachtungspunkt (24) aus gemäß einem Sichtfeld (26) des Piloten (14) beobachtet werden kann;
mindestens eine Position, die sogenannte Zwischenposition, des Head-up-Anzeigebildschirms (28) im Cockpit (17), die einer Position entspricht, in der ein Teil, der sogenannte Zwischenteil (34), gegenüber mindestens einem Teil (36) des Head-down-Anzeigebildschirms (20) im Sichtfeld (26) des Piloten (14) zwischen dem Beobachtungspunkt (24) und diesem Teil (36) des Head-down-Anzeigebildschirms (20) angeordnet ist;
- ein Anzeigesteuermodul (30) auf dem Head-up-Anzeigebildschirm (28), das so konfiguriert ist, dass es einen konformen Anzeigebereich (38) anzeigt, der gegenüber der äußeren Umgebung des Luftfahrzeugs (12) angeordnet ist und, wenn sich der Head-up-Anzeigebildschirm (28) in der Zwischenposition befindet, einen nicht konformen Anzeigebereich (42) in dem Zwischenteil (34),
wobei das Anzeigesteuermodul (30) so konfiguriert ist, dass es mindestens eine Verknüpfung (46) zwischen dem konformen Anzeigebereich (38) und dem nicht konformen Anzeigebereich (42) anzeigt,
wobei das Anzeigesteuermodul (30) konfiguriert ist, um ein erstes Symbol (40) und ein zweites Symbol (44) mit mindestens einem Element (15) außerhalb des Luftfahrzeugs (12) zu verknüpfen und um das erste Symbol (40) in dem konformen Anzeigebereich (38), das zweite Symbol (44) in dem nicht konformen Anzeigebereich (42) und die Verknüpfung (46), die das erste Symbol (40) und das zweite Symbol (44) verbindet, anzuzeigen.

2. Anzeigesystem (10) nach Anspruch 1, wobei das Anzeigesteuermodul (30) so konfiguriert ist, dass es ein kollimiertes Bild anzeigt.

3. Anzeigesystem (10) nach Anspruch 1 oder 2, bei dem der Head-up-Anzeigebildschirm (28) ein Visier ist, das in einen Helm (32) integriert ist, der geeignet ist, vom Piloten (14) getragen zu werden.

4. Anzeigesystem (10) nach einem der vorhergehenden Ansprüche, wobei der konforme Anzeigebereich (38) und der nicht konforme Anzeigebereich (42) voneinander getrennt sind und in Kontakt stehen.

5. Anzeigesystem (10) nach einem der vorhergehenden Ansprüche, das außerdem ein Erfassungsmodul (48) umfasst, das so konfiguriert ist, dass es Informationen über die Bewegungen von mindestens einem Finger des Piloten (12) in Kontakt mit einer berührungsempfindlichen Schnittstelle erfasst, wobei die Informationen zur Steuerung des Anzeigesteuermoduls (30) bestimmt sind.

6. Head-up-Anzeigeverfahren in einem Luftfahrzeug (12), das von mindestens einem Piloten (14) gesteuert werden kann und einen Head-down-Anzeigebildschirm (20) aufweist, der geeignet ist, Informationen des nicht konformen Typs anzuzeigen, wobei das Anzeigeverfahren die folgenden Schritte umfasst:
- Beobachtung eines Head-up-Anzeigebildschirms (28), der zumindest teilweise transparent und im Cockpit (17) des Luftfahrzeugs (12) angeordnet ist durch den Piloten (14), von einem Beobachtungspunkt (24) aus, gemäß einem Sichtfeld (26) des Piloten (14);
- Anzeigen eines konformen Anzeigebereichs (38) auf dem Head-up-Anzeigebildschirm (28), der gegenüber der äußeren Umgebung des Luftfahrzeugs (12) angeordnet ist;
- Anzeigen eines nicht konformen Anzeigebereichs (42), wenn sich der Head-up-Anzeigebildschirm (28) in einer Position, der sogenannten Zwischenposition, des Head-up-Anzeigebildschirms (28) im Cockpit (17) befindet, die einer Position entspricht, in der ein Teil, der sogenannte Zwischenteil (34), gegenüber mindestens einem Teil (36) des Head-down-Anzeigebildschirms (20) im Sichtfeld (26) des Piloten (14) zwischen dem Beobachtungspunkt (24) und diesem Teil (36) des Head-down-Anzeigebildschirms (20) angeordnet ist, wobei der nicht konforme Anzeigebereich (42) in dem Zwischenteil (34) angezeigt wird,
mindestens eine Verknüpfung (46) zwischen dem konformen Anzeigebereich (38) und dem nicht konformen Anzeigebereich (42) angezeigt wird, wobei ein erstes Symbol (40) und ein zweites Symbol (44) mit mindestens einem Element (15) außerhalb des Luftfahrzeugs (12) verbunden sind, wobei das erste Symbol (40) in dem konformen Anzeigebereich (38) angezeigt wird, das zweite Symbol (44) in dem nicht konformen Anzeigebereich (42) angezeigt wird, und wobei die Verknüpfung (46) das erste Symbol (40) und das zweite Symbol (44) verbindet.

7. Head-up-Anzeigeverfahren nach Anspruch 6, das vor dem Schritt der Anzeige des nicht konformen Anzeigebereichs (42) die folgenden Schritte umfasst:
- Anzeige einer nicht konformen Information auf dem Head-down-Anzeigebildschirm (20);
- Ausschalten des Head-down-Anzeigebildschirms (20).

8. Computerprogrammprodukt, das Softwareanweisungen umfasst, die, wenn sie von Informatikausrüstung umgesetzt werden, die Schritte nach dem Schritt Beobachtung des Verfahrens nach Anspruch 6 oder 7 umsetzen.

## Claims

1. A head up display system (10) configured to be embedded in an aircraft (12) pilotable by at least one pilot (14) and having a head-down display screen (20) suitable for displaying information of the non-conformal type, the display system (10) including:
a head-up display screen (28) at least partially transparent and configured to be arranged in the cockpit (17) of the aircraft (12) in a plurality of positions and to be observed by the pilot (14) from an observation point (24) within a field of view (26) of the pilot (14);
at least one position, called interposition position, of the head-up display screen (28) in the cockpit (17) corresponding to a position in which a part, called interposed part (34), is arranged facing at least one part (36) of the head-down display screen (20) in the field of view (26) of the pilot (14) between the observation point (24) and this part (36) of the head-down display screen (20);
a display control module (30) on the head-up display screen (28) configured to display a conformal display area (38) facing the external environment of the aircraft (12) and, when the head-up display screen (28) is in the interposition position, a non-conformal display area (42) in the interposed part (34),
the display control module (30) being configured to display at least one link (46) between the conformal display area (38) and the non-conformal display area (42),
the display control module (30) being configured to associate a first symbol (40) and a second symbol (44) with at least one element (15) external to the aircraft (12) and to display the first symbol (40) in the conformal display area (38), the second symbol (44) in the non-conformal display area (42) and the link (46) connecting the first symbol (40) and the second symbol (44).

2. The display system (10) according to claim 1, wherein the display control module (30) is configured to display a collimated image.

3. The display system (10) according to claim 1 or 2, wherein the head-up display screen (28) is a visor integrated into a helmet (32) able to be worn by the pilot (14).

4. The display system (10) according to one of the preceding claims, wherein the conformal display area (38) and the non-conformal display area (42) are distinct and in contact.

5. The display system (10) according to one of the preceding claims, further comprising an acquisition module (48) configured to acquire information relative to the movements of at least one finger of the pilot (12) in contact with a touch-sensitive interface, the information being intended to control the display control module (30).

6. A head-up display method in an aircraft (12) able to be piloted by at least one pilot (14) and having a head-down display screen (20) suitable for displaying information of the non-conformal type, the display method comprising the following steps:
- observation by the pilot (14) of an at least partially transparent head-up display (28) arranged in the cockpit (17) of the aircraft (12) from an observation point (24) within a field of view (26) of the pilot (14);
- display on the head-up display screen (28) of a conformal display area (38) facing the external environment of the aircraft (12);
- display of a non-conformal display area (42) when the head-up display screen (28) is in a position, called interposition position, of the head-up display screen (28) in the cockpit (17) corresponding to a position in which a part, called interposed part (34), is arranged facing at least part (36) of the head-down display screen (20) in the field of view (26) of the pilot (14) between the observation point (24) and this part (36) of the head-down display screen (20), the non-conformal display area (42) being displayed in the interposed part (34),
at least one link (46) being displayed between the conformal display area (38) and the non- conformal display area (42), a first symbol (40) and a second symbol (44) being associated with at least one element (15) external to the aircraft (12), the first symbol (40) being displayed in the conformal display area (38), the second symbol (44) being displayed in the non- conformal display area (42), and the link (46) connecting the first symbol (40) and the second symbol (44).

7. The head-up display method according to claim 6, including the following steps before the step for displaying the non-conformal display area (42):
- displaying non-conformal information on the head-down display screen (20);
- turning off the head-down display screen (20).

8. A computer program product comprising software instructions which, when they are implemented by a piece of computer equipment, carry out the method according to claim 6 or 7.
